# FASCICULE DE BREVET EUROPEEN

(11) **EP 3 137 545 B1**
(45) Date de publication et mention de la délivrance du brevet: **16.05.2018**
(21) Numéro de dépôt: 15719768.2
(22) Date de dépôt: 16.03.2015
(51) Int. Cl.: C08L 53/02, C08F 255/04, C08F 287/00, B29C 47/02, B29C 45/14, C03C 17/30, C08K 5/54, C08L 23/06, E06B 3/54, C08K 5/5419, C08L 23/12, C08L 23/16

(54) **COMPOSITION D'ÉLASTOMÈRE THERMOPLASTIQUE POUR ENCAPSULATION**
THERMOPLASTISCHE ELASTOMERZUSAMMENSETZUNG ZUR VERKAPSELUNG
THERMOPLASTIC ELASTOMER COMPOSITION FOR ENCAPSULATION

(30) Priorité: 26.03.2014 FR 1452580
(43) Date de publication de la demande: 08.03.2017
(73) Titulaire: Saint-Gobain Glass France, 92400 Courbevoie (FR)
(72) Inventeur: THIMONIER, Sylvain, F-60190 Estrées Saint Denis (FR)
(74) Mandataire: Saint-Gobain Recherche
(86) Numéro de dépôt international: PCT/FR2015/050634
(87) Numéro de publication internationale: WO 2015/145021

(56) Documents cités:
- EP-A1- 2 623 526
- EP-A2- 0 322 054
- WO-A1-2011/068597
- DE-C1- 3 530 364
- US-A1- 2012 199 199

## Description

La présente invention concerne une composition d'encapsulation à base d'élastomère thermoplastique à forte teneur en agents de couplage, permettant l'encapsulation de vitrages d'automobiles sans étape de primage préalable.

Dans le domaine industriel des vitrages automobiles, le terme « encapsulation » désigne un procédé ou une étape de surmoulage d'une matière polymérique autour du périmètre d'un vitrage. La matière est injectée à l'état fluide dans un moule formant un cadre étanche autour du bord du vitrage. Après durcissement de la matière par réaction de polymérisation et/ou de réticulation (cas des polymères thermodurcissables) ou par refroidissement (cas des polymères thermoplastiques), le moule est ouvert et retiré, laissant en périphérie du vitrage un cordon profilé en contact avec la tranche et au moins une des deux faces du vitrage, souvent avec les deux faces du vitrage.

Le polymère formant le cordon profilé est souvent un élastomère capable de jouer le rôle de joint entre le vitrage et la carrosserie. Des polymères qui ne sont pas des élastomères peuvent toutefois également être surmoulés par encapsulation pour jouer d'autres fonctions. Le cordon profilé obtenu est alors généralement un cordon composite comprenant à la fois des éléments élastomères et des éléments non élastomères juxtaposés.

L'étape d'encapsulation est généralement précédée d'une étape de nettoyage et d'activation de la surface à surmouler, en périphérie du vitrage, puis un primaire est souvent appliqué sur la zone activée, destinée à venir en contact avec le cordon profilé surmoulé.

Les élastomères thermoplastiques (TPE), et en particulier les TPE à base de styrène (TPE-S), sont utilisés depuis longtemps pour l'encapsulation de vitrages automobiles, c'est-à-dire pour le surmoulage par injection d'un joint élastomère couvrant au moins une partie du pourtour du vitrage.

Pour garantir une adhésion suffisante du joint au vitrage, il est généralement indispensable d'y déposer, avant l'étape de surmoulage par injection, une mince couche de primaire (voir par exemple EP 0570282, US 6 348 123, EP 2162487).

Cette étape d'application d'une couche de primaire est problématique. Elle est très difficile à automatiser et est donc la plupart du temps réalisée manuellement ce qui accroit considérablement le coût de production. Les compositions de primaire contiennent des produits hautement réactifs, toxiques et inflammables, tels que des isocyanates et des solvants organiques, et leur manipulation par des opérateurs doit être faite sous hotte et pose des problèmes évidents d'hygiène, de sécurité et d'environnement.

Par ailleurs, la couche de primaire appliquée manuellement nécessite souvent une étape subséquente de préchauffage du verre avant l'étape d'encapsulation proprement dite.

Il serait donc souhaitable de pouvoir automatiser cette étape de primage, voire de s'en passer totalement, sans que l'adhérence du joint sur le vitrage ne s'en trouve dégradée.

La Demanderesse a mis au point une composition pour le surmoulage de joints élastomères sur des vitrages, en particulier des vitrages automobiles, qui permet d'atteindre cet objectif, c'est-à-dire de surmouler ladite composition directement sur le vitrage, sans application préalable d'une couche de primaire.

La présente demande a donc pour objet une composition thermoplastique pour le surmoulage d'un élastomère sur un substrat en verre minéral comprenant,
(a) de 50 à 70 % en poids d'au moins un élastomère thermoplastique (TPE) choisi parmi les copolymères à blocs styréniques (TPE-S),
(b) de 20 à 35 % en poids, de préférence de 22 à 30 % en poids, d'une polyoléfine choisie parmi les homopolymères de propylène (PP), les homopolymères d'éthylène (PE) et les copolymères de propylène et d'éthylène,
(c) au moins 7 % en poids, de préférence de 8 à 20 % en poids, en particulier de 9 à 15 % en poids, d'un alcoxysilane fonctionnel,
ces pourcentages étant exprimés par rapport à la somme des composants (a), (b) et (c).

La composition thermoplastique de la présente invention comprend donc trois ingrédients essentiels :
- un élastomère thermoplastique styrénique apportant les propriétés élastiques (composant a),
- une polyoléfine (composant b) qui a principalement pour fonction d'augmenter la dureté du matériau surmoulé final, et
- un silane fonctionnel (composant c) en une concentration supérieure à celles utilisées habituellement dans des compositions d'encapsulation.

Les TPE-S utilisables dans la présente invention comprennent principalement les familles suivantes :
- SBS (styrène-butadiène-styrène) : copolymères séquencés comportant un bloc central de polybutadiène encadré par deux blocs de polystyrène,
- SEBS : (styrène-éthylène-butadiène-styrène) : copolymères obtenus par hydrogénation des SBS,
- SEPS (styrène-éthylène-propylène-styrène) : copolymères comportant un bloc central poly(éthylène-propylène) flanqué de deux blocs de polystyrène,
- SEEPS (styrène-éthylène-éthylène-propylène-styrène) : copolymères obtenus par hydrogénation de copolymères styrène-butadiène/isoprène-styrène.

Ces polymères sont disponibles sur le marché en des qualités contenant des charges minérales, mais également sous forme de matériaux sans charges.

Dans la présente invention on utilisera des TPE essentiellement exempts de charges, ou contenant moins de 5 % de charges minérales, de préférence moins de 2 % de charges minérales.

Ils sont disponibles, par exemple, sous les dénominations commerciales suivantes : Dryflex (Hexpol TPE), Evoprene (AlphaGary), Sofprene (SOFTER), Laprene (SOFTER), Asaprene (Asahi Kasei), Nilflex (Taroplast).

Ces produits peuvent contenir une certaine fraction de plastifiants, fluidifiants ou lubrifiants organiques qui est considérée dans la présente demande comme faisant partie de la fraction TPE-S de la composition thermoplastique.

La température de fusion des TPE-S est avantageusement comprise entre 180 °C et 210 °C, en particulier entre 190 °C et 200 °C.

A l'état fondu ils doivent être suffisamment fluides pour pouvoir être moulés par injection. Il est toutefois impossible de donner des indications précises concernant leur viscosité à l'état fondu car celle-ci dépend non seulement de la température mais également de la force de cisaillement à laquelle les polymères sont soumis. Les fournisseurs proposent généralement des qualités dites « pour moulage par injection »

Les compositions de la présente invention contiennent de 50 à 70 % en poids, de préférence de 55 à 68 % en poids et idéalement de 60 à 65 % en poids, de TPE-S, ces pourcentages étant rapporté à la somme des composants (a), (b) et (c).

Pour pouvoir fonctionner de manière satisfaisante en tant que joint de vitrage automobile, la partie surmoulée obtenue à la fin du procédé de surmoulage de la présente invention a de préférence une dureté Shore A comprise entre 50 et 80, en particulier entre 60 et 75.

L'utilisation de TPE-S en combinaison avec un silane fonctionnel seul ne permet pas d'obtenir ces valeurs de dureté. C'est pourquoi il est nécessaire d'incorporer au TPE-S une polyoléfine compatible avec celui-ci. Cette polyoléfine est un homopolymère de propylène ou d'éthylène ou un copolymère de propylène et d'éthylène. Sa masse moléculaire moyenne en poids est généralement inférieure à 100 000 g/mol, de préférence comprise entre 20 000 et 60 000 g/mol.

On peut citer à titre d'exemples de produits disponibles dans le commerce les polypropylènes commercialisés sous les dénominations Hostalen, Sabic, Ineos ou Borealis. Ces produits sont essentiellement exempts de charges minérales, mais peuvent contenir de faibles quantités, généralement moins de 5 % en poids, d'agents plastifiants et/ou lubrifiants et moins de 1 % en poids d'agents stabilisants.

Le troisième composant essentiel de la composition de la présente invention est un silane fonctionnel, à savoir une molécule organique formée d'un atome de silicium lié à au moins un, de préférence au moins deux groupes organiques hydrolysables, typiquement des groupes alcoxy, et à au moins un groupe organique non hydrolysable, typiquement un groupe alkyle portant une fonction réactive vis-à-vis du substrat à surmouler et/ou des composants (a) et (b) de la composition thermoplastique.

On utilisera de préférence des trialcoxysilanes et en particulier les triéthoxysilanes et triméthoxysilanes, ces derniers étant particulièrement préférés car plus réactifs que les premiers.

La fonction réactive portée par le groupe alkyle est de préférence une fonction vinyle, acryle, méthacryle, époxy, mercapto ou amino. Le groupe alkyle peut bien entendu porter plus d'une seule fonction réactive.

L'alcoxysilane fonctionnel est donc de préférence choisi parmi les aminosilanes, époxysilanes, vinylsilanes, mercaptosilanes et (méth)acrylsilanes et des mélanges de ceux-ci, et est de préférence un mélange d'au moins deux silanes choisis parmi les aminosilanes, vinylsilanes et époxysilanes.

On peut citer à titre de silanes fonctionnels les plus intéressants le méthacryloxypropyltriméthoxysilane, le N-phénylaminopropyltriméthoxysilane, le N-2-(aminoéthyl)-11-amino-undécyltriméthoxysilane, le 3-glycidyl-oxypropyltriméthoxysilane, le 3-aminopropyltriméthoxysilane, le N-2-(amino-éthyl)-3-aminopropyltriméthoxysilane, le 3-mercaptopropyltriméthoxysilane.

Les silanes fonctionnels sont des agents de couplage bien connus depuis des dizaines d'années. Ils sont généralement utilisés en faibles quantités, c'est-à-dire à raison de moins de 3 %, le plus souvent à raison de moins de 2 % en poids, pour améliorer l'adhésion entre des matériaux polymères et des matériaux minéraux tels que des verres minéraux.

Dans la présente invention ces molécules, d'un coût très élevé, sont utilisées en des concentrations significativement plus élevées que dans l'état de la technique. L'utilisation de quantités importantes d'agent de couplage augmente certes de manière indésirable le prix de revient des compositions thermoplastiques destinées au surmoulage, mais ce surcoût est largement compensé par la possibilité de supprimer l'étape manuelle de primage et les coûts salariaux qui y sont associés.

Les agents de couplage sont de préférence incorporés dans la composition thermoplastique sous forme pure, c'est-à-dire non dissoute dans un solvant organique ou aqueux de manière à ce que la composition thermoplastique destinée au surmoulage soit exempte de solvants organiques volatiles.

Les compositions thermoplastiques de la présente invention peuvent contenir en outre un agent de couplage additionnel, différent des silanes fonctionnels décrits ci-dessus, choisi parmi les polymères organiques greffés d'anhydride maléique (MAH). Cet agent de couplage est généralement utilisé en des quantités inférieures à celui du ou des silanes fonctionnels. La composition thermoplastique de la présente invention contient de préférence de 0,5 à 10 % en poids, de préférence de 1 à 5 % en poids, rapporté à la somme de (a) + (b) + (c), d'au moins un polymère organique greffé d'anhydride maléique (MAH).

Ces polymères organiques greffés d'anhydride doivent être compatibles avec le mélange TPE-S/polyoléfines de la composition thermoplastique et sont choisis de préférence parmi les TPE-S greffés d'anhydride maléique et les polyoléfines greffées d'anhydride maléique.

On utilisera de préférence des polymères organiques greffés MAH ayant une partie polymère identique à celles du TPE-S ou de la polyoléfine. Autrement dit, lorsque le TPE-S est un SBS, on utilisera de préférence un SBS greffé MAH, et lorsque la polyoléfine est un homopolymère de propylène, on utilisera de préférence un polypropylène greffé MAH.

Ces polymères greffés MAH sont connus et disponibles sur le marché par exemple sous les dénominations AMPLIFY (The Dow Cheminal Company) et SCONA (Byk).

La composition thermoplastique de la présente invention peut être préparée immédiatement avant le procédé de surmoulage, par introduction dans une extrudeuse ou vis d'injection, des quantités appropriées des ingrédients au moyen de doseurs volumétriques.

Elle peut également être préparée par mélange des différents ingrédients dans un mélangeur approprié puis être stockée, de préférence à froid, avant d'être utilisée.

La présente invention a également pour objet deux procédés de surmoulage d'une telle composition thermoplastique sur un substrat, notamment en verre organique ou minéral, en particulier en verre minéral.

Ces procédés sont destinés en particulier à former des joints en périphérie de vitrages automobiles, en verre minéral ou en polymère.

Le terme « procédé de surmoulage » englobe les procédés de surmoulage par injection où la composition thermoplastique chaude et fluidifiée est injectée dans une cavité de moule dans laquelle a été insérée la partie d'un substrat destinée à venir au contact avec la composition thermoplastique, ainsi que les procédés de surmoulage par extrusion où une composition thermoplastique chaude et plastifiée est extrudée, généralement sous forme d'un boudin de matière, au contact d'un substrat. Dans les procédés de surmoulage par extrusion la composition n'est donc pas injectée dans un moule, mais il existe certains procédés d'extrusion où la composition thermoplastique est mise en forme, après extrusion et avant durcissement, au moyen d'une partie de moule.

Le procédé de surmoulage par injection de la présente invention comprend les trois étapes successives suivantes :
(1) chauffage d'une composition thermoplastique selon l'invention à une température suffisante pour obtenir une viscosité inférieure à 1000 Pa.s⁻¹ ;
(2) injection de la composition thermoplastique chauffée dans une cavité de moule dans laquelle est insérée une partie d'un substrat, de préférence en verre minéral, en particulier le bord d'un vitrage, et
(3) démoulage de l'ensemble vitrage-surmoulage.

Un procédé de surmoulage par extrusion de la présente invention comprend les deux étapes successives suivantes
(1) chauffage d'une composition thermoplastique selon l'invention dans une extrudeuse jusqu'à une température suffisante pour obtenir une viscosité inférieure à 1000 Pa.s⁻¹,
(2) extrusion de la composition thermoplastique chauffée au contact d'un substrat, de préférence en verre minéral, en particulier le bord d'un vitrage.

Comme il sera montré ci-après dans les exemples, le chauffage et la mise en contact de la composition thermoplastique selon l'invention avec la surface d'un substrat en verre suffisent pour obtenir, après une certaine période de réaction, une adhésion satisfaisante entre la phase polymère et le substrat.

Il n'est donc pas nécessaire de soumettre le substrat nu à un prétraitement ou le produit obtenu à un post-traitement.

Dans un mode de réalisation intéressant du procédé de surmoulage selon l'invention, la surface du substrat n'est donc soumise à aucun prétraitement chimique ou physique. Elle ne reçoit en particulier aucun revêtement de primage destiné à améliorer l'adhésion entre le polymère surmoulé et le substrat. La partie du substrat venant au contact avec la composition thermoplastique est donc dépourvue d'une couche organique de primage et au cours de l'étape (2) d'injection ou d'extrusion, la composition thermoplastique chauffée vient directement en contact avec le substrat, de préférence avec le verre minéral formant le vitrage.

Il est toutefois envisageable de mettre en oeuvre certaines étapes d'activation ou de préparation de la surface à surmouler, généralement avec le but d'améliorer l'adhésion du polymère.

Ainsi le procédé de surmoulage selon l'invention peut comprendre en outre une étape de prétraitement physique de la surface du substrat à surmouler par un plasma ou une décharge couronne, de préférence un plasma atmosphérique.

On peut également mettre avantageusement en oeuvre une étape de prétraitement chimique de la surface à surmouler par application d'un silane fonctionnel et/ou d'un promoteur d'adhésion choisi parmi les titanates, zirconates et zirco-aluminates organiques. Les silanes fonctionnels peuvent en principe être choisis parmi ceux incorporés dans la composition thermoplastique. Des titanates, zirconates et zirco-aluminates organiques utilisables pour ce prétraitement chimique de la surface sont connus et disponibles sur le marché par exemple sous les dénominations commerciales TYZOR® par la société Dorf Ketal (titanates et zirconates) et MANCHEM® (zirco-aluminates).

Bien qu'un traitement thermique précédant ou suivant le procédé de surmoulage ne soit pas indispensable, il peut avantageusement accélérer les réactions chimiques responsables du durcissement et de l'adhésion de la phase polymère au substrat.

Le procédé selon l'invention comprend donc avantageusement en outre, après l'étape de démoulage ou d'extrusion, ou bien avant l'étape d'injection ou d'extrusion de la composition thermoplastique, une étape de chauffage du substrat ou de la partie du substrat surmoulée par le polymère.

Ce préchauffage ou post-chauffage se fait de préférence à une température supérieure à 50 °C, en particulier comprise entre 60 et 150 °C, idéalement entre 70 et 100 °C.

### Exemples

On réalise à l'aide de doseurs volumétriques disposés sur un poste d'injection le mélange thermoplastique suivant :
63 parts en poids d'un copolymère SBS,
25 parts en poids de polypropylène homopolymère,
5 parts en poids de 3-aminopropyltriéthoxysilane,
5 parts en poids de vinyltriméthoxysilane,
1 part en poids de polypropylène greffé d'anhydride maléique, et
1 part en poids de SEBS greffé d'anhydride maléique.

Ces ingrédients sont mélangés et chauffés à une température de 200 °C à 250 °C (température de la vis). La matière fondue est injectée dans un moule de surmoulage dans lequel est inséré un vitrage n'ayant subi aucun prétraitement. Ni le moule ni le vitrage ne sont chauffés indépendamment.

Après environ une minute, le vitrage surmoulé d'un joint est démoulé et conservé pendant 7 jours à une température de 23 °C et une humidité relative de 50 %, période au cours de laquelle la réaction des agents de couplage se poursuit.

Après 7 jours de stockage, on évalue l'adhésion du joint au vitrage au moyen d'un test de pelage à 90 °C (vitesse de traction : 100 mm/minute). On soumet ensuite le vitrage surmoulé à un vieillissement en cataplasme humide (14 jours à 70 °C, humidité relative 95 %, puis choc thermique par refroidissement pendant 2 heures à -20 °C) et on renouvelle le teste d'adhésion (Exemple 1).

On répète le mode opératoire ci-dessus en réalisant les variantes suivantes :
Exemple 2 : Le vitrage est préchauffé à 80 °C avant l'étape de surmoulage de la composition thermoplastique ;
Exemple 3 : La zone du vitrage destinée à venir en contact avec la composition thermoplastique est soumise à un traitement par plasma atmosphérique ;
Exemple 4 : Le vitrage surmoulé est soumis, après démoulage, à une étape de post-durcissement d'une heure à 80 °C ;
Exemple 5 : On applique manuellement, avant l'insertion du vitrage dans le moule d'injection, une composition d'activation chimique comprenant une solution de 2% de N-(3- (triméthoxysilyl)propyl)-1,2- éthanediamine et 2% de 3-Triméthoxysilylpropane-1-thiol dans de l'isopropanol (Betawipe VP 04604 de Dow Automotive)
Exemple 6 : On applique manuellement, avant l'insertion du vitrage dans le moule d'injection, une solution de 2% de N-(3-(triméthoxysilyl)propyl)-1,2-éthylènediamine et de 2 % de tris(dodécyl-benzènesulfonato-O)(propane-2-olato)titane dans un mélange de solvants organiques (Sika Aktivator).

Le tableau 1 montre le type de rupture et la résistance au pelage, constatés pour les exemples 1 à 6, avant et après l'étape de vieillissement en cataplasme humide.

**Tableau 1 (exemples selon l'invention)**

| | Avant vieillissement | | Après vieillissement | |
|---|---|---|---|---|
| | Rupture | Résistance au pelage (N/cm) | Rupture | Résistance au pelage (N/cm) |
| Exemple 1 | adhésive | >30 | cohésive | >35 |
| Exemple 2 | cohésive | >40 | cohésive | >50 |
| Exemple 3 | adhésive | >35 | cohésive | >40 |
| Exemple 4 | cohésive | >30 | cohésive | >40 |
| Exemple 5 | adhésive | >40 | cohésive | >40 |
| Exemple 6 | adhésive | >30 | cohésive | >40 |

On constate que la composition de surmoulage selon l'invention donne de meilleurs résultats après une période de vieillissement à chaud. Ces résultats indiquent que la réaction responsable de l'adhérence polymère/verre se poursuit certainement bien après le démoulage, voire après la première période de stockage de 7 jours à température ambiante.

Après la période de vieillissement, toutes les ruptures sont de type « cohésif » (adhésion polymère/verre est supérieure à la cohérence interne du matériau polymère), ce qui est un résultat très difficile à obtenir avec des primaires d'adhésion.

Lorsqu'on reproduit les exemples 1 à 6 ci-dessus mais en utilisant cinq fois moins de silanes, c'est-à-dire une part en poids de 3-aminopropyltriéthoxysilane et une part en poids de vinyltriméthoxysilane, on obtient les résultats d'adhésion présentés ci-dessous dans le tableau 2.

**Tableau 2 (exemples comparatifs)**

| | Avant vieillissement | |
|---|---|---|
| | Rupture | Résistance au pelage (N/cm) |
| Exemple comparatif 1 | adhésive | >5 |
| Exemple comparatif 2 | adhésive | >20 |
| Exemple comparatif 3 | adhésive | >10 |
| Exemple comparatif 4 | adhésive | >20 |
| Exemple comparatif 5 | adhésive | >5 |
| Exemple comparatif 6 | adhésive | >5 |

On constate que toutes les ruptures sont de type adhésif et les résistances au pelage insuffisantes (inférieures à 30 N/cm).

## Revendications

1. Composition thermoplastique pour le surmoulage d'un élastomère sur un substrat en verre minéral comprenant,
(a) de 50 à 70 % en poids d'au moins un élastomère thermoplastique (TPE) choisi parmi les copolymères à blocs styréniques (TPE-S),
(b) de 20 à 35 % en poids, de préférence de 22 à 30 % en poids, d'une polyoléfine choisie parmi les homopolymères de propylène (PP), les homopolymères d'éthylène (PE) et les copolymères de propylène et d'éthylène,
(c) au moins 7 % en poids, de préférence de 8 à 20 % en poids, en particulier de 9 à 15 % en poids, d'un alcoxysilane fonctionnel,
ces pourcentages étant exprimés par rapport à la somme des composants (a), (b) et (c).

2. Composition selon la revendication 1, **caractérisée par le fait qu'**elle comprend en outre de 0,5 à 10 % en poids, de préférence de 1 à 5 % en poids, rapporté à la somme de (a) + (b) + (c), d'au moins un polymère organique greffé d'anhydride maléique (MAH).

3. Composition selon la revendication 2, **caractérisée par le fait que** le polymère organique greffé d'anhydride maléique est choisi parmi les TPE-S greffés d'anhydride maléique et les polyoléfines greffées d'anhydride maléique.

4. Composition selon l'une quelconque des revendications précédentes, **caractérisée par le fait que** l'alcoxysilane fonctionnel est choisi parmi les aminosilanes, époxysilanes, vinylsilanes, mercaptosilanes et (méth)acrylsilanes et des mélanges de ceux-ci, et est de préférence un mélange d'au moins deux silanes choisis parmi les aminosilanes, vinylsilanes et époxysilanes.

5. Composition selon l'une quelconque des revendications précédentes, **caractérisée par le fait qu'**elle est exempte de solvants organiques volatiles.

6. Procédé de surmoulage par injection d'une composition thermoplastique sur un substrat, comprenant les étapes successives suivantes :
(1) Chauffage d'une composition thermoplastique selon l'une quelconque des revendications précédentes à une température suffisante pour obtenir une viscosité inférieure à 1000 Pa.s⁻¹.
(2) Injection de la composition thermoplastique chauffée dans une cavité de moule dans laquelle est inséré une partie d'un substrat, de préférence le bord d'un vitrage,
(3) Démoulage de l'ensemble vitrage-surmoulage.

7. Procédé de surmoulage par extrusion d'une composition thermoplastique sur un substrat, comprenant les étapes successives suivantes :
(1) Chauffage d'une composition thermoplastique selon l'une quelconque des revendication 1 à 5 dans une extrudeuse, jusqu'à une température suffisante pour obtenir une viscosité inférieure à 1000 Pa.s⁻¹,
(2) Extrusion de la composition thermoplastique chauffée au contact d'un substrat, de préférence le bord d'un vitrage.

8. Procédé selon la revendication 6 ou 7, **caractérisé par le fait qu'**il comprend en outre, après l'étape de démoulage ou d'extrusion, une étape de chauffage du substrat ou de la partie du substrat surmoulée par le polymère, de préférence à une température supérieure à 50 °C, en particulier comprise entre 60 et 150 °C, idéalement entre 70 et 100 °C.

9. Procédé selon l'une quelconque des revendications 6 à 8, **caractérisé par le fait que** la partie du substrat venant au contact avec la composition thermoplastique est dépourvue d'une couche organique de primage, la composition thermoplastique chauffée venant directement en contact avec le substrat, de préférence le verre minéral formant le vitrage.

10. Procédé selon la revendication 6 ou 7, **caractérisé par le fait qu'**il comprend en outre, avant l'étape d'injection ou d'extrusion de la composition thermoplastique chauffée, une étape de chauffage du substrat ou de la partie du substrat surmoulée, de préférence à une température supérieure à 50 °C, en particulier comprise entre 60 et 150 °C, idéalement entre 70 et 100 °C.

11. Procédé selon l'une quelconque des revendications 6 à 10, **caractérisé par le fait qu'**il comprend en outre une étape de prétraitement physique de la surface du substrat à surmouler par un plasma ou une décharge couronne, de préférence un plasma atmosphérique, ou une étape de prétraitement chimique de la surface à surmouler par application d'un silane fonctionnel et/ou d'un promoteur d'adhésion choisi parmi les titanates, zirconates et zirco-aluminates organiques.

## Patentansprüche

1. Thermoplastische Zusammensetzung für das Überformen eines Elastomers auf ein Mineralglassubstrat, umfassend
(a) 50 bis 70 Gew.-% mindestens eines thermoplastischen Elastomers (TPE), ausgewählt aus den Styrolblockcopolymeren (TPE-S),
(b) 20 bis 35 Gew.-%, vorzugsweise 22 bis 30 Gew.-%, eines Polyolefins, ausgewählt aus den Propylen-Homopolymeren (PP), den Ethylen-Homopolymeren (PE) und den Propylen- und Ethylen-Copolymeren,
(c) mindestens 7 Gew.-%, vorzugsweise 8 bis 20 Gew.-%, insbesondere 9 bis 15 Gew.-%, eines funktionellen Alcoxysilans,
wobei diese Prozentsätze in Bezug zur Summe dieser Bestandteile (a), (b) und (c) ausgedrückt sind.

2. Zusammensetzung nach Anspruch 1, **dadurch gekennzeichnet, dass** sie ferner 0,5 bis 10 Gew.-%, vorzugsweise 1 bis 5 Gew.-%, bezogen auf die Summe von (a) + (b) + (c), mindestens eines Maleinanhydrid (MAH)-aufgepfropften organischen Polymers umfasst.

3. Zusammensetzung nach Anspruch 2, **dadurch gekennzeichnet, dass** das Maleinanhydrid-aufgepfropfte organische Polymer aus den Maleinanhydrid-aufgepfropften TPE-S und den Maleinanhydrid-aufgepfropften Polyolefinen ausgewählt ist.

4. Zusammensetzung nach einem der vorangehenden Ansprüche, **dadurch gekennzeichnet, dass** das funktionelle Alcoxysilan aus den Aminosilanen, Epoxysilanen, Vinylsilanen, Mercaptosilanen und (Meth)acrylsilanen und Gemischen derselben ausgewählt ist und vorzugsweise ein Gemisch von mindestens zwei Silanen, ausgewählt aus den Aminosilanen, Vinylsilanen und Epoxysilanen, ist.

5. Zusammensetzung nach einem der vorangehenden Ansprüche, **dadurch gekennzeichnet, dass** sie frei von flüchtigen organischen Lösungsmitteln ist.

6. Überformungsverfahren durch Spritzen einer thermoplastischen Zusammensetzung auf ein Substrat, umfassend die folgenden aufeinanderfolgenden Schritte:
(1) Erwärmen einer thermoplastischen Zusammensetzung nach einem der vorangehenden Ansprüche auf eine Temperatur, die ausreichend ist, um eine Viskosität unter 1000 Pa.s⁻¹ zu erhalten,
(2) Spritzen der erwärmten thermoplastischen Zusammensetzung in einen Formenhohlraum, in den ein Teil eines Substrats, vorzugsweise der Rand einer Verglasung, eingesetzt ist,
(3) Entformen der Einheit Verglasung-Überformung.

7. Überformungsverfahren durch Extrusion einer thermoplastischen Zusammensetzung auf ein Substrat, umfassend die folgenden aufeinanderfolgenden Schritte:
(1) Erwärmen einer thermoplastischen Zusammensetzung nach einem der Ansprüche 1 bis 5 in einem Extruder bis auf eine Temperatur, die ausreichend ist, um eine Viskosität unter 1000 Pa.s⁻¹ zu erhalten,
(2) Extrudieren der erwärmten thermoplastischen Zusammensetzung im Kontakt mit einem Substrat, vorzugsweise dem Rand einer Verglasung.

8. Verfahren nach Anspruch 6 oder 7, **dadurch gekennzeichnet, dass** es zudem nach dem Schritt des Entformens oder des Extrudierens einen Schritt des Erwärmens des Substrats oder des von dem Polymer überformten Teils des Substrats vorzugsweise auf eine Temperatur über 50 °C, insbesondere zwischen 60 und 150 °C, idealerweise zwischen 70 und 100 °C, umfasst.

9. Verfahren nach einem der Ansprüche 6 bis 8, **dadurch gekennzeichnet, dass** der Teil des Substrats, der mit der thermoplastischen Zusammensetzung in Kontakt kommt, frei von einer organischen Primerschicht ist, wobei die erwärmte thermoplastische Zusammensetzung mit dem Substrat direkt in Kontakt kommt, vorzugsweise mit dem die Verglasung bildenden Mineralglas.

10. Verfahren nach Anspruch 6 oder 7, **dadurch gekennzeichnet, dass** es zudem vor dem Schritt des Spritzens oder des Extrudierens der erwärmten thermoplastischen Zusammensetzung einen Schritt des Erwärmens des Substrats oder des überformten Teils des Substrats vorzugsweise auf eine Temperatur über 50 °C, insbesondere zwischen 60 und 150 °C, idealerweise zwischen 70 und 100 °C, umfasst.

11. Verfahren nach einem der Ansprüche 6 bis 10, **dadurch gekennzeichnet, dass** es zudem einen Schritt der physikalischen Vorbehandlung der zu überformenden Oberfläche des Substrats mit einem Plasma oder einer Coronaentladung, vorzugsweise einem atmosphärischen Plasma, oder einen Schritt der chemischen Vorbehandlung der zu überformenden Oberfläche durch Auftragen eines funktionellen Silans und/oder eines Adhäsionspromoters, ausgewählt aus den organischen Titanaten, Zirconaten und Zirco-Aluminaten, umfasst.

## Claims

1. A thermoplastic composition for the overmolding of an elastomer on a substrate made of mineral glass, comprising:
(a) from 50 to 70% by weight of at least one thermoplastic elastomer (TPE) chosen from copolymers comprising styrene blocks (TPE-S),
(b) from 20 to 35% by weight, preferably from 22 to 30% by weight, of a polyolefin chosen from propylene homopolymers (PP), ethylene homopolymers (PE) and copolymers of propylene and ethylene,
(c) at least 7% by weight, preferably from 8 to 20% by weight, in particular from 9 to 15% by weight, of a functional alkoxysilane,
these percentages being expressed with respect to the sum of the components (a), (b) and (c).

2. The composition as claimed in claim 1, **characterized in that** it additionally comprises from 0.5 to 10% by weight, preferably from 1 to 5% by weight, with respect to the sum of (a) + (b) + (c), of at least one organic polymer grafted with maleic anhydride (MAH).

3. The composition as claimed in claim 2, **characterized in that** the organic polymer grafted with maleic anhydride is chosen from TPE-Ss grafted with maleic anhydride and polyolefins grafted with maleic anhydride.

4. The composition as claimed in any one of the preceding claims, **characterized in that** the functional alkoxysilane is chosen from aminosilanes, epoxysilanes, vinylsilanes, mercaptosilanes and (meth)acryloylsilanes and mixtures of these, and is preferably a mixture of at least two silanes chosen from aminosilanes, vinylsilanes and epoxysilanes.

5. The composition as claimed in any one of the preceding claims, **characterized in that** it is devoid of volatile organic solvents.

6. A process for overmolding by injection molding of a thermoplastic composition on a substrate, comprising the following successive steps:
(1) heating a thermoplastic composition as claimed in any one of the preceding claims to a temperature sufficient to obtain a viscosity of less than 1000 Pa.s⁻¹,
(2) injecting the heated thermoplastic composition into a mold cavity into which is inserted a part of a substrate, preferably the edge of a glazing,
(3) removing the glazing-overmolding assembly from the mold.

7. A process for overmolding by extrusion of a thermoplastic composition on a substrate, comprising the following successive steps:
(1) heating a thermoplastic composition as claimed in any one of claims 1 to 5 in an extruder, up to a temperature sufficient to obtain a viscosity of less than 1000 Pa.s⁻¹,
(2) extruding the heated thermoplastic composition in contact with a substrate, preferably the edge of a glazing.

8. The process as claimed in claim 6 or 7, **characterized in that** it additionally comprises, after the step of removing from the mold or of extrusion, a step the heating the substrate or the part of the substrate overmolded by the polymer, preferably at a temperature of greater than 50°C, in particular of between 60 and 150°C, ideally between 70 and 100°C.

9. The process as claimed in any one of claims 6 to 8, **characterized in that** the part of the substrate which comes into contact with the thermoplastic composition is devoid of an organic priming layer, the heated thermoplastic composition coming directly into contact with the substrate, preferably the mineral glass formant the glazing.

10. The process as claimed in claim 6 or 7, **characterized in that** it additionally comprises, before the step of injection or of extrusion of the heated thermoplastic composition, a step of heating the substrate or the overmolded part of the substrate, preferably at a temperature of greater than 50°C, in particular of between 60 and 150°C, ideally between 70 and 100°C.

11. The process as claimed in any one of claims 6 to 10, **characterized in that** it additionally comprises a step of physical pretreatment of the surface of the substrate to be overmolded with a plasma or a corona discharge, preferably an atmospheric plasma, or a step of chemical pretreatment of the surface to be overmolded by application of a functional silane and/or an adhesion promoter chosen from organic titanates, zirconates and zircoaluminates.
